# EUROPEAN PATENT SPECIFICATION

(11) **EP 4 138 355 B1**
(45) Date of publication and mention of the grant of the patent: **08.04.2026**
(21) Application number: 20933148.7
(22) Date of filing: 29.04.2020
(51) Int. Cl.: G06F 16/33, G06F 18/00, G06F 40/30, G10L 15/22, G10L 25/57, H04L 9/40, B60R 16/037, G06F 3/01, G06F 3/16, G06F 16/9032, G06F 21/62, H04L 9/08

(54) **IN-VEHICLE VOICE INTERACTION METHOD AND DEVICE**
SPRACHINTERAKTIONSVERFAHREN UND -VORRICHTUNG IN EINEM FAHRZEUG
PROCÉDÉ ET DISPOSITIF D'INTERACTION VOCALE DANS UN VÉHICULE

(43) Date of publication of application: 22.02.2023
(73) Proprietor: Shenzhen Yinwang Intelligent Technologies Co., Ltd., Shenzhen, Guangdong 518129 (CN)
(72) Inventor: HUANG, Youjia, Shenzhen, Guangdong 518129 (CN); NIE, Weiran, Shenzhen, Guangdong 518129 (CN); GAO, Yi, Shenzhen, Guangdong 518129 (CN)
(74) Representative: Pfenning, Meinig & Partner mbB
(86) International application number: PCT/CN2020/087913
(87) International publication number: WO 2021/217527

(56) References cited:
- CN-A- 107 465 678
- CN-A- 110 033 774
- KR-A- 20190 062 982
- US-A1- 2019 347 387
- US-A1- 2019 347 387
- US-A1- 2020 082 123
- US-A1- 2020 082 123

## Description

### TECHNICAL FIELD

Embodiments of this application relate to the field of intelligent speech interaction, and in particular, to an in-vehicle speech interaction method and a device.

### BACKGROUND

Human-computer intelligent speech interaction is a main research direction in the human-computer interaction science field and the artificial intelligence field, and is used to effectively transfer information between humans and computers in natural language. In an existing human-computer intelligent speech interaction technology, a user sends a speech signal, and a device recognizes speech and converts the speech into a text. The text is sent to a natural language understanding (natural language understanding, NLU) module for semantic parsing to obtain a user intention, and a feedback text may be further generated based on the user intention obtained by the NLU module through parsing. Then, a natural language generation (natural language generation, NLU) module converts content in the feedback text into speech, and plays the speech to the user, to complete human-computer intelligent speech interaction.

Currently, an application scenario of a user is relatively complex. Feedback made on user speech in the conventional technology usually only corresponds to a literal meaning of a user instruction, and privacy security is not considered, which is prone to cause privacy leakage.

US 2020/082123 describes a computer-implemented method that includes identifying a plurality of protected pieces from a conversation. The computer-implemented method further includes generating one or more confidence scores for each protected piece, wherein a confidence score is a degree of associativity between a protected piece and a type of sensitive information. The computer-implemented method further includes determining that the protected piece is associated with the type of sensitive information. The computer-implemented method further includes determining a type of protection action for each protected piece in the plurality of protected pieces. The computer-implemented method further includes performing the type of protection action for each protected piece in the plurality of protected pieces to form a modified conversation that is devoid of the sensitive information.

US 2019/347387 describes a method for voice-activated medical assistance. The method may include receiving an indication of an audio request from a user and determining whether a response to the audio request includes medical information associated with a patient. After determining whether the response includes medical information, the medical assistance server may identify an access class of the medical information and a permission level associated with accessing the access class of the medical information. The method may further include determining whether the user is authorized to access the access class based on the permission level and transmitting an indication of the response to the audio request based on determining whether the user is authorized.

### SUMMARY

Embodiments of this application provide an in-vehicle speech interaction method and a device. In human-computer speech interaction, a device can make distinguished feedback on privacy-related response content, to protect privacy security.

According to a first aspect, an in-vehicle speech interaction method is provided. The method includes: obtaining user speech information, where the user speech information may be an analog signal collected by an audio collection device (for example, a microphone array), or may be text information obtained by processing the collected analog signal. The method may further include: determining a user instruction based on the user speech information; further determining, based on the user instruction, whether response content to the user instruction is privacy-related; and determining, based on whether the response content is privacy-related, whether to output the response content in a privacy protection mode. The determining, based on whether the response content is privacy-related, whether to output the response content in a privacy protection mode is specifically: if it is determined that the response content is privacy-related and the user is in a single-person scenario, outputting the response content in a non-privacy mode.

This embodiment of this application provides an in-vehicle speech interaction method, to make distinguished feedback on user instructions of a user in different scenarios. In particular, privacy-related response content may be recognized, distinguished feedback is made on the privacy-related response content, and the response content is output in a privacy protection mode, to protect privacy security as far as possible.

With reference to the first aspect, in a first possible implementation of the first aspect, the method further includes: obtaining a user image. The determining a user instruction based on the user speech information is specifically: determining a gaze direction of a user based on the user image; when determining that the gaze direction of the user is a target direction, determining that an intention of the user is to perform human-computer interaction; and determining the user instruction based on the user speech information sent when the gaze direction of the user is the target direction. The obtaining a user image may mean that an integrated image collection component (for example, a camera module) of an intelligent device performing human-computer interaction with the user photographs an image, or may mean that an in-vehicle camera photographs an image and then transmits the image to the intelligent device. The target direction may be a preset direction. The direction may be a direction pointing to an in-vehicle device, for example, the target direction may be a direction pointing to the intelligent device. Alternatively, the target direction may be a direction pointing to a collection device, for example, the target direction may be a direction pointing to the camera.

In the method provided in this embodiment of this application, the gaze direction of the user may be used to determine whether the user performs human-computer interaction. If it is determined that the intention of the user is to perform human-computer interaction, that is, the intelligent device needs to process and respond to the user speech information obtained by the intelligent device, a subsequent step is performed to determine the user instruction, determine whether the response content is privacy-related, and so on. In a wakeup-free scenario or a long-time wakeup scenario, chat speech between the user and another person can be prevented from frequently erroneously triggering a response of the intelligent device.

In this embodiment of this application, although it is determined that the response content to the user instruction is privacy-related, because the user is in the single-person scenario, and there is no risk of privacy leakage, the response content to the user instruction may be output in the non-privacy mode, for example, the response content to the user instruction is output by using a public device in a vehicle.

With reference to the first aspect or the first possible implementation of the first aspect, in a third possible implementation of the first aspect, the determining, based on whether the response content is privacy-related, whether to output the response content in a privacy protection mode is specifically: if it is determined that the response content is privacy-related and the user is in a multi-person scenario, outputting the response content in the privacy protection mode.

In this embodiment of this application, it is determined that the response content to the user instruction is privacy-related. In addition, because the user is in the multi-person scenario, and there is a risk of privacy leakage, the response content to the user instruction may be output in the privacy protection mode, for example, the response content to the user instruction is output by using a non-public device. The non-public device is oriented to only a user, and can effectively ensure that privacy is not leaked.

With reference to the first aspect or the first possible implementation of the first aspect, in a fourth possible implementation of the first aspect, the determining, based on whether the response content is privacy-related, whether to output the response content in a privacy protection mode is specifically: if it is determined that the response content is privacy-related, outputting the response content in the privacy protection mode.

In this embodiment of this application, once it is determined that the response content to the user instruction is privacy-related, and there is a risk of privacy leakage, the response content to the user instruction may be output in the privacy protection mode, for example, the response content to the user instruction is output by using a non-public device. The non-public device is oriented to only a user, and can effectively ensure that privacy is not leaked.

With reference to the third or the fourth possible implementation of the first aspect, in a fifth possible implementation of the first aspect, the outputting the response content in the privacy protection mode is specifically: when outputting the response content by using a public device, hiding private content included in the response content; or outputting the response content by using a non-public device.

In this embodiment of this application, the user instruction may be responded to in the foregoing two manners, so that privacy leakage can be effectively prevented while the user instruction is responded to.

According to a second aspect, a device is provided, including: an obtaining unit, configured to obtain user speech information; and
a processing unit, configured to determine a user instruction based on the user speech information, where the processing unit is further configured to determine, based on the user instruction, whether response content to the user instruction is privacy-related; and determine, based on whether the response content is privacy-related, whether to output the response content in a privacy protection mode. The processing unit is specifically configured to: if it is determined that the response content is privacy-related and the user is in a single-person scenario, output the response content in a non-privacy mode.

With reference to the second aspect, in a first possible implementation of the second aspect, the obtaining unit is further configured to obtain a user image. The processing unit is specifically configured to: determine a gaze direction of a user based on the user image; when determining that the gaze direction of the user is a target direction, determine that an intention of the user is to perform human-computer interaction; and determine the user instruction based on the user speech information sent when the gaze direction of the user is the target direction.

With reference to the second aspect or the first possible implementation of the second aspect, in a third possible implementation of the second aspect, if it is determined that the response content is privacy-related and the user is in a multi-person scenario, the response content is output in the privacy protection mode.

With reference to the second aspect or the first possible implementation of the second aspect, in a fourth possible implementation of the second aspect, the processing unit is specifically configured to: if it is determined that the response content is privacy-related, output the response content in the privacy protection mode.

With reference to the third or the fourth possible implementation of the second aspect, in a fifth possible implementation of the second aspect, the processing unit is specifically configured to: when outputting the response content by using a public device, hide private content included in the response content; or output the response content by using a non-public device.

According to a third aspect, an apparatus is provided. The apparatus includes at least one processor and a memory, and at least one processor is coupled to the memory. The memory is configured to store a computer program. The at least one processor is configured to execute the computer program stored in the memory, so that the apparatus performs the method according to any one of the first aspect or the possible implementations of the first aspect.

The apparatus may be a terminal device, a server, or the like. The terminal device herein includes but is not limited to a smartphone, a vehicle-mounted apparatus (for example, a self-driving device), a personal computer, an artificial intelligent device, a tablet computer, a personal digital assistant, an intelligent wearable device (for example, a smart watch or band or smart glasses), an intelligent speech device (for example, a smart sound box), a virtual reality/hybrid reality/augmented reality device, a network access device (for example, a gateway), or the like. The server may include a storage server, a computing server, and the like.

According to a fourth aspect, this application discloses a computer-readable storage medium. The computer-readable storage medium stores instructions. When the computer-readable storage medium is run on any one of the second aspect and the implementations of the second aspect and the apparatus according to the third aspect, the apparatus is enabled to perform the method according to any one of the first aspect and the implementations of the first aspect.

According to a fifth aspect, this application provides a chip, including an interface and a processor. The processor is configured to obtain a computer program by using the interface and implement the method according to any one of the first aspect or the possible implementations of the first aspect.

According to a sixth aspect, this application provides a chip, including a plurality of circuit modules. The plurality of circuit modules are configured to implement the method according to any one of the first aspect or the possible implementations of the first aspect. In some implementations, the plurality of circuit modules implement the method according to any one of the first aspect or the possible implementations of the first aspect together with a software program.

### BRIEF DESCRIPTION OF DRAWINGS

FIG. 1 shows a human-computer speech interaction scenario according to an embodiment of this application;
FIG. 2 is a block diagram of a structure of an intelligent device according to an embodiment of this application;
FIG. 3 is a schematic diagram of a human-computer speech interaction scenario according to an embodiment of this application;
FIG. 4 is a schematic flowchart of an in-vehicle speech interaction method according to an embodiment of this application;
FIG. 5 to FIG. 9 each are a schematic diagram of an in-vehicle speech interaction method according to an embodiment of this application;
FIG. 10 is a schematic flowchart of a speech interaction method according to an embodiment of this application;
FIG. 11 is a block diagram of another structure of an intelligent device according to an embodiment of this application; and
FIG. 12 is a block diagram of another structure of an intelligent device according to an embodiment of this application.

### DESCRIPTION OF EMBODIMENTS

The following describes technical solutions of embodiments in this application with reference to accompanying drawings.

The terms in embodiments of the present invention are first explained.

### (1) Intention

In embodiments of this application, an intention of a user is used to describe a requirement, a purpose, and the like of the user. For example, the intention of the user is to perform human-computer interaction with an intelligent device, and the user may wake up the intelligent device by using a wakeup word.

It should be noted that, in an intelligent speech interaction scenario, the intention of the user is to perform human-computer interaction, which may be understood as that the user sends an instruction to the intelligent device in a speech form, and expects the intelligent device to respond to the user instruction.

### (2) User speech information

In embodiments of this application, the user speech information may be an analog signal received by a device, or may be text information obtained after the device processes the analog signal.

### (3) User instruction

In embodiments of this application, the user instruction is an instruction that is initiated by a user and that needs to be responded to by an intelligent device, for example, "Enable a short message service" or "Answer a call".

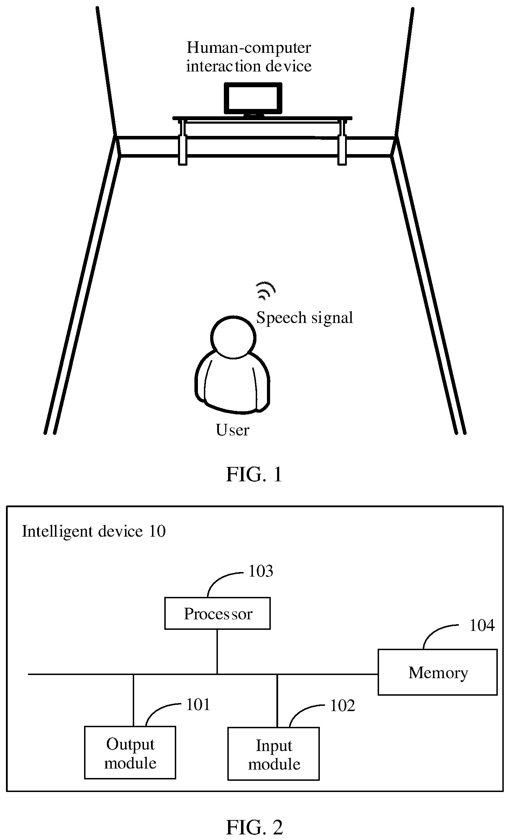

The method provided in embodiments of this application is applied to an in-vehicle human-computer speech interaction scenario. Refer to FIG. 1. In the scenario, a user (for example, a driver) sends a speech signal, and an intelligent device may receive the speech signal of the user. The intelligent device may further extract user speech information based on the speech signal of the user, and determine a user instruction based on the user speech information, to respond to the user instruction.

For example, the user sends a speech signal "Play a song", and the intelligent device receives the speech signal and converts the speech signal into text information. The intelligent device may further perform semantic parsing on the text information to determine a user instruction, and finally respond to the user instruction, for example, running music play software to play a song.

It should be noted that a working mode of the intelligent device includes a wakeup mode and a wakeup-free mode. In the wakeup mode, the user needs to send a wakeup word to wake up the intelligent device, so that the intelligent device receives a speech signal of the user. In the wakeup-free mode, the user does not need to send the wakeup word to wake up the intelligent device, and the intelligent device can receive the speech signal of the user.

Refer to FIG. 2. An intelligent device 10 includes an output module 101, an input module 102, a processor 103, and a memory 104.

In specific implementation, the output module 101 may communicate with the processor 103 to output a processing result of the processor. For example, the output module 101 may be a liquid crystal display (liquid crystal display, LCD), a light emitting diode (light emitting diode, LED) display device, a cathode ray tube (cathode ray tube, CRT) display device, a projector (projector), or a speaker.

The input module 102 may communicate with the processor 103, and may receive user input in a plurality of manners. For example, the input module 102 may be a mouse, a keyboard, a touchscreen device, a sensing device, or a microphone array.

The processor 103 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The memory 104 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 104 is not limited thereto. The memory may exist independently or may be connected to the processor. Alternatively, the memory may be integrated with the processor. The memory 104 may further access various cloud services and cloud service management modules by using a network interface of the intelligent device.

In this embodiment of this application, the processor 103 may run a software module stored in the memory 104 to process a speech signal received by the input module 102 to determine a user instruction, and respond to the user instruction by using the output module 10. The software module stored in the memory 104 includes an addressee detection (addressee detection, AD) module, a natural language generation (natural language generation, NLG) module, a text to speech (text to speech, TTS) module, an automatic speech recognition (automatic speech recognition, ASR) module, a dialogue management (dialogue management, DM) module, and the like.

The AD module is configured to perform binary classification on speech received by the input module 102, and recognize whether the speech is speech sent by a user during human-computer interaction, that is, speech sent by the user to the intelligent device. The AD module may further filter out the speech sent by the user during human-computer interaction, and input, into the ASR module, the speech sent by the user during human-computer interaction.

The ASR module may convert a speech signal received from the AD module into text information, and may further input the text information into the DM module.

The DM module may determine a user instruction based on the text information received from the ASR module. The DM module is further configured to perform dialogue management, for example, determine an answer or feedback based on a question. Therefore, the DM module may further generate response content to the user instruction. The response content to the user instruction may be text information. The DM module may further input the response content to the user instruction into the NLG module.

The NLG module is configured to generate, based on the response content to the user instruction, text information that conforms to a natural language habit, and may further display the text information by using the output module 101.

The TTS module is configured to convert the text information generated by the NLG module into speech, and may further play the speech by using the output module 10.

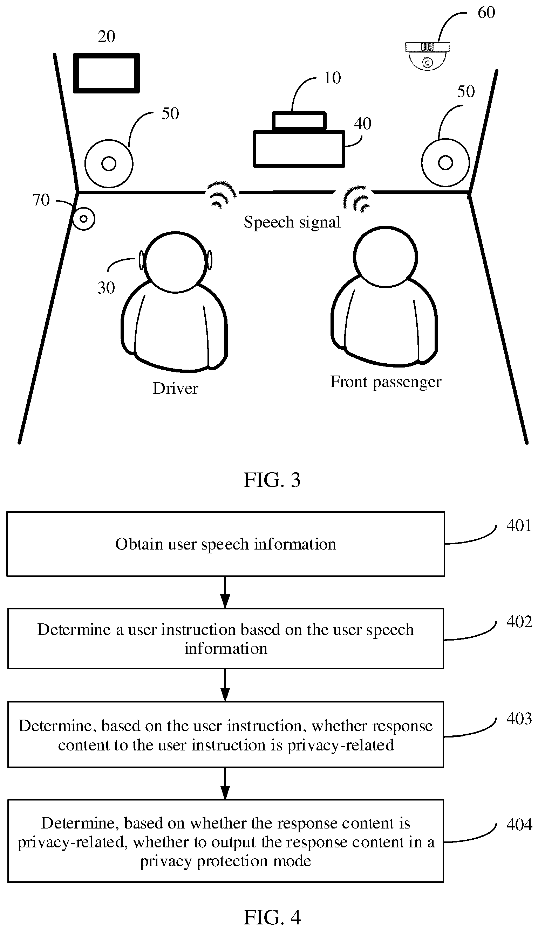

In specific implementation, in addition to the intelligent device 10, a vehicle may further include another device. For example, refer to FIG. 3. The vehicle further includes a head-up display screen 20 at a driver's seat, a headset 30 worn by a driver, a central control display screen 40, in-vehicle audio 50, a camera 60, and a micro speaker 70 at the driver's seat. The intelligent device 10 may be integrated with the central control display screen 40, and the head-up display screen 20, the headset 30 worn by the driver, the in-vehicle audio 50, and the camera 60 may exist independently. The devices in the vehicle may interact with each other. For example, the camera 60 may transmit a photographed image to the intelligent device 10 for processing.

In this embodiment of this application, the devices in the vehicle may be divided into a public device and a non-public device. Content output by the public device is oriented to most people, and most people can receive the content output by the public device. For example, most people can receive speech played by the public device or a text or an image displayed by the public device.

The non-public device is oriented to a specified person (for example, a driver), and the specified person can receive content output by the non-public device. For example, the specified person can receive speech played by the non-public device or a text or an image displayed by the non-public device.

The in-vehicle scenario shown in FIG. 3 is used as an example. The public device may be the in-vehicle audio 50 or the in-vehicle central control display screen 40. The non-public device may be the headset 30 worn by the driver or the micro speaker 70 at the driver's seat, or may be the head-up display screen 20 at the driver's seat.

It should be noted that, in speech interaction between the intelligent device and a user, a feedback manner of the intelligent device greatly affects user experience. Simply understanding an intention of the user or responding to a user instruction cannot make distinguished responses to different scenarios in which the user is located, which may also bring bad experience to the user. Currently, a solution for speech interaction between a device and a user does not pay much attention to content in this aspect, and mostly focuses on semantic understanding. In the conventional technology, feedback made by a device on user speech usually only corresponds to a literal meaning of a user instruction, and a difference between different scenarios is not considered.

Embodiments of this application provide an in-vehicle speech interaction method, to make distinguished feedback on user instructions of a user in different scenarios. In particular, privacy-related response content may be recognized, distinguished feedback is made on the privacy-related response content, and the response content is output in a privacy protection mode, to protect privacy security as far as possible.

It may be understood that, in embodiments of this application, a terminal device and/or a network device may perform some or all of steps in embodiments of this application, and these steps or operations are merely examples. In embodiments of this application, another operation or various operation variations may be performed. In addition, each step may be performed in an order different from that presented in embodiments of this application, and not all operations in embodiments of this application may be performed.

An embodiment of this application provides an in-vehicle speech interaction method, which is applicable to the in-vehicle scenario shown in FIG. 3. The method may be performed by the intelligent device 10 in a vehicle. As shown in FIG. 4, the method includes the following steps.

401. Obtain user speech information.

In specific implementation, an input module 102 of the intelligent device may receive speech (that is, an analog signal). The analog signal received by the input module 102 may be the user speech information in this embodiment of this application. Alternatively, the input module 102 may input the received speech into a processor 103 of the intelligent device. The processor 103 (for example, the ASR module) may obtain text information based on simulation, where the text information may also be the user speech information in this embodiment of this application.

For example, the input module 102 may be a microphone array. The microphone array may pick up speech sent by a user, and the user speech information may be the speech picked up by the microphone array.

402. Determine a user instruction based on the user speech information.

In this embodiment of this application, after the input module 102 of the intelligent device obtains the analog signal, the ASR module converts the analog signal into text information, and may further input the text information into the DM module. The DM module may perform semantic parsing on the text information to determine the user instruction.

The DM module may further generate response content to the user instruction based on a natural dialogue habit. The response content generated by the DM module for the user instruction may be text information.

In a possible implementation, the DM module may further perform semantic parsing on the text information input by the ASR module, to determine a slot of the user instruction. The slot of the user instruction may be considered as a parameter of the user instruction. For example, the user instruction is "Adjust a temperature of an air conditioner to 26 degrees", and "26 degrees" is the slot (or the parameter) of the user instruction.

403. Determine, based on the user instruction, whether the response content to the user instruction is privacy-related.

Specifically, it may be determined whether the response content generated by the DM module includes private content. If the response content to the user instruction includes the private content, it is determined that the response content to the user instruction is privacy-related.

In a possible implementation, the memory 104 of the intelligent device may store a private content list including at least one piece of private content. The processor 103 queries the private content list stored in the memory 104, and if the response content to the user instruction includes one or more pieces of private content in the private content list, determines that the response content to the user instruction is privacy-related.

For example, private content related to WeChat is denoted as private content 1, and private content related to Memo is denoted as private content 2. The private content list may include the private content 1 and the private content 2. When the response content to the user instruction includes the private content 1 or the private content 2, it is determined that the response content to the user instruction is privacy-related.

404. Determine, based on whether the response content is privacy-related, whether to output the response content in a privacy protection mode.

In specific implementation, it is determined, only when the response content to the user instruction is privacy-related, whether to output the response content to the user instruction in the privacy protection mode, to protect user privacy. When the response content to the user instruction is not privacy-related, the response content to the user instruction is output in a normal manner, for example, the response content to the user instruction is output in a non-privacy mode.

In a possible implementation, when determining that the response content to the user instruction is privacy-related and the user is in a single-person scenario, the processor 103 of the intelligent device outputs the response content in a non-privacy mode.

In another possible implementation, when determining that the response content to the user instruction is privacy-related and the user is in a multi-person scenario, the processor 103 of the intelligent device outputs the response content in the privacy protection mode.

In another possible implementation, when determining that the response content to the user instruction is privacy-related, the processor 103 of the intelligent device outputs the response content in the privacy protection mode.

It should be noted that the in-vehicle camera 60 may photograph a user image, and send the user image to the intelligent device 10. The processor 103 of the intelligent device 10 may further parse and process the user image. If a plurality of human images are obtained by parsing the user image, it is determined that a scenario in which the user is currently located includes a plurality of persons, that is, the user is in the multi-person scenario. If one human image is obtained by parsing the user image, it is determined that the user is currently in the single-person scenario.

In specific implementation, the processor 103 may perform facial target detection on the user image by using a yolo algorithm, and then determine a quantity of persons in a scenario, for example, a quantity of persons in the vehicle, based on a quantity of recognized facial targets; and determine, based on the quantity of persons in the scenario, whether the user is in the single-person scenario or the multi-person scenario.

In specific implementation, the intelligent device may output the response content to the user instruction in the following two privacy protection modes, where "output" means that the intelligent device presents the response content to the user instruction. When the response content is text information, the response content may be displayed by using a display screen; or when the response content is speech, the response content may be played by using audio. The two privacy protection modes are specifically as follows:

Mode 1: When outputting the response content by using a public device, the intelligent device hides private content included in the response content.

To complete intelligent human-computer speech interaction to respond to the user instruction initiated by the user by using speech, the response content to user instruction may be output on the public device. The public device is oriented to most people, and user privacy may be leaked. Therefore, when the response content to the user instruction is output on the public device, the private content included in the response content may be hidden.

That the response content to the user instruction is output by using the public device may be displaying the response content to the user instruction by using a public display screen (for example, a vehicle-mounted central control display), but the private content needs to be hidden, for example, information such as a key personal name or location is hidden.

It may be understood that hiding the private content may be hiding the private content by using a special image (for example, a mosaic); or may be skipping displaying the private content, replacing the private content with a special character, and displaying only content that is not privacy-related.

In this embodiment of this application, that the response content to the user instruction is output by using the public device may be playing the response content to the user instruction by using a public audio system (for example, vehicle-mounted audio), but the private content in the response content cannot be played, for example, information such as a key personal name or location is hidden, and only content that is not privacy-related is played.

Mode 2: The intelligent device outputs the response content by using a non-public device.

To complete intelligent human-computer speech interaction to respond to the user instruction initiated by the user by using speech, the response content to user instruction may be output on a non-public module. Because the non-public module is oriented to only a user (for example, a driver) of the intelligent device, private content of the user may be protected when the response content to the user instruction is output on the non-public module.

That the response content to the user instruction is output by using the non-public module may be displaying the response content to the user instruction by using a non-public display screen (for example, a head-up display screen at a driver's seat), or playing the response content to the user instruction by using a non-public audio system (for example, a headset worn by a driver).

It should be noted that, if a scenario in which the user is located includes a plurality of persons, speech received by the input module 102 of the intelligent device has two possibilities. One possibility is a real speech signal (that is, words spoken by the user to the device) that is input by the user to the device, and the other possibility is chat speech between users, where the speech is noise for the intelligent device to determine a real user instruction.

Generally, it is considered that a speech signal received after the user wakes up the intelligent device by using a wakeup word is valid. The intelligent device receives the wakeup word sent by the user, receives user speech after wakeup, determines a user instruction based on the received user speech, and responds to the user instruction.

When the intelligent device is in a wakeup state for a long time, much of speech received by the input module 102 belongs to chat speech of the user. To avoid unnecessary feedback made by the device on the speech, the received speech may be determined to extract speech sent by the user during human-computer interaction. Specifically, the received speech may be determined in the following two manners.

Manner 1: The AD module determines whether the speech received by the input module 102 is speech sent by the user during human-computer interaction.

It should be noted that a speaking speed, an intonation, a rhythm, or a speech emotion of a chat between users is usually different from those of speech for human-computer interaction. It may be determined, based on these differences, whether a receiving object of a segment of speech is the intelligent device. In this embodiment of this application, the AD module may use these differences to distinguish whether user speech is the speech sent by the user during human-computer interaction or chat speech between the user and another person.

Specifically, the AD model is module that performs binary classification based on an input speech signal. The speech received by the input module 102 is input into the AD module, and the AD module may output a result value. This result value indicates that the speech received by the input module 102 is the speech sent by the user during human-computer interaction, or that the speech received by the input module 102 is not the speech sent by the user during human-computer interaction. Alternatively, the result value may indicate a probability that the speech received by the input module 102 is the speech sent by the user during human-computer interaction. When the probability is greater than a corresponding threshold, it may be considered that the speech received by the input module 102 is the speech sent by the user during human-computer interaction.

The AD module may be obtained by training a training sample. The training sample for the AD module may be an AD determining sample, an intention recognition (NLU) sample, a part of speech (POS) tagging sample, a text pair confrontation sample, or the like. The AD determining sample may include a speech signal, and an AD determining result of speech information indicates that a receiving object of the speech signal is an intelligent device or that a receiving object of the speech signal is not an intelligent device. The intention recognition (NLU) sample may include text information and a user intention (or a user instruction) corresponding to the text information. The part of speech (POS) tagging sample may include a word (Word) and a part of speech. The text pair confrontation sample includes a text pair and an amount of interference between text pairs.

A loss function of each of the AD determining sample, the intention recognition (NLU) sample, and the part of speech (POS) tagging sample is a cross-entropy loss, and a loss function of the text pair confrontation sample is a Euclidean distance between vectors corresponding to two texts. It should be noted that the loss function is used to calculate an error of the training sample, and an error of the AD module may be determined based on the loss function of each training sample.

Manner 2: It is determined, based on a gazed object of the user, whether a receiving object of user speech is the intelligent device.

Generally, when sending speech to the intelligent device, the user gazes at the intelligent device at the same time. Therefore, when it is determined that the gazed object of the user is the intelligent device, it may be determined that the receiving object of the user speech is the intelligent device.

In specific implementation, the intelligent device may further obtain a user image. For example, the camera 60 in the vehicle may photograph a user image, and send the user image to the processor 103 of the intelligent device 10.

The processor 103 determines a gaze direction of the user based on the user image, and when determining that the gaze direction of the user is a target direction, determines that an intention of the user is to perform human-computer interaction. Further, the processor 103 may determine the user instruction based on the user speech information sent when the gaze direction of the user is the target direction.

In this embodiment of this application, the target direction may be a preset direction. The direction may be a direction pointing to an in-vehicle device, for example, the target direction may be a direction pointing to the intelligent device. Alternatively, the target direction may be a direction pointing to a collection device, for example, the target direction may be a direction pointing to the camera.

In a possible implementation, line-of-sight tracking is performed by using a posture of a human head. Specifically, first, facial target detection is performed by using the yolo algorithm, and after a facial target is detected, 2D facial key point detection is performed. Then, 3D facial model matching is performed based on a detected 2D facial key point. After a 3D facial model is matched, a posture angle of a human face may be obtained based on a rotation relationship between a 3D facial key point and the 2D facial key point, and this angle is used as a line-of-sight angle of the user. It is determined, based on the line-of-sight angle of the user, whether the user gazes at the intelligent device. If a gazed object of the user is the intelligent device, it is determined that an intention of the user is to perform human-computer interaction.

Optionally, the method in this embodiment of this application further includes: When determining that a received speech signal is chat speech between the user and another person, the intelligent device displays a dynamic waveform on a display screen to indicate that the intelligent device is receiving external speech, and skips displaying a recognition result of the speech signal in real time.

The speech signal is converted into text information by using the ASR module only when it is determined that the received speech signal is sent by the user to the device, and the text information may be further displayed on the display screen, so that the user determines whether the recognition result is accurate.

The scenario shown in FIG. 3 is used as an example. The driver sends a speech signal 1 "Do you have breakfast", and a person in a front passenger's seat replies with a speech signal 2 "No, I haven't had a chance". The person in the driver's seat sends a speech signal 3 "What time do you get up", and the person in the front passenger's seat replies with a speech signal 4 "I got up quite late".

The microphone array of the intelligent device collects the speech signal 1 to the speech signal 4; analyzes the speech signal 1 to the speech signal 4; and determines, based on an intonation, a speaking speed, or a language emotion of the speech signal, that the speech signal 1 to speech signal 4 is chat speech between a passenger and a driver. In this case, subsequent processing is not performed, that is, the speech signal is not converted into text information to determine a user instruction.

Alternatively, the intelligent device determines a gazed object of the user (the driver) based on the camera 60, and does not perform subsequent processing if the gazed object of the user is not the intelligent device.

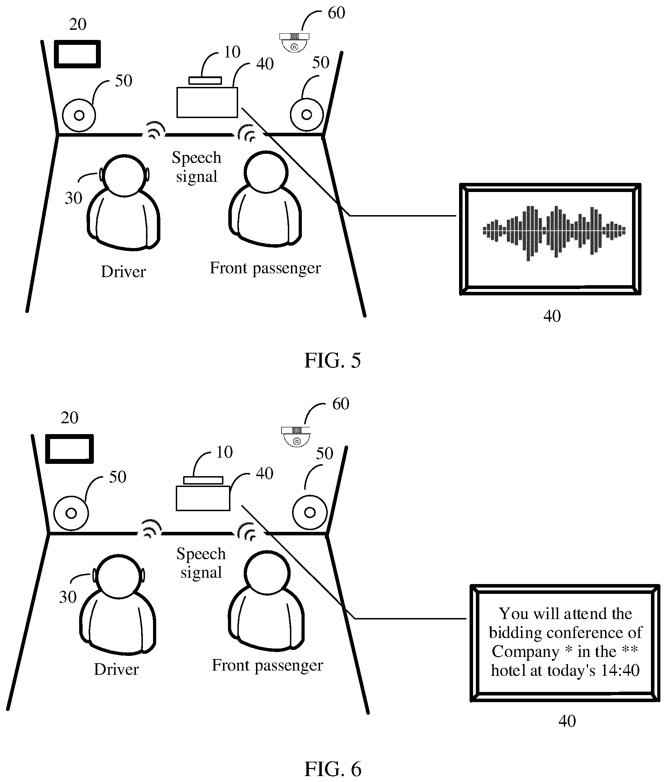

Optionally, refer to FIG. 5. The central control display screen 40 may display a waveform to indicate that user speech is being received.

The driver sends a speech signal 5 "Turn on an air conditioner and adjust a temperature to 24 degrees".

The microphone array of the intelligent device collects the speech signal 5; analyzes the speech signal 5; and determines, based on an intonation, a speaking speed, or a language emotion of the speech signal, that the speech signal 5 is sent by the driver to the device. In this case, subsequent processing is performed to convert the speech signal into text information and determine that a user instruction is "Turn on an air conditioner and adjust a temperature to 24 degrees".

Further, if the intelligent device determines that response content to the user instruction "Turn on an air conditioner and adjust a temperature to 24 degrees" is not privacy-related, the intelligent device makes feedback on the intention to turn on an in-vehicle air conditioner and adjust a temperature to 24 degrees Celsius.

The driver sends a speech signal 6 "View today's schedule".

The microphone array of the intelligent device collects the speech signal 6; analyzes the speech signal 6; and determines, based on an intonation, a speaking speed, or a language emotion of the speech signal, that the speech signal 6 is sent by the driver to the intelligent device 10 during human-computer interaction. In this case, subsequent processing is performed to convert the speech signal into text information and determine, based on the text information, that a user instruction is "View today's schedule".

Further, the intelligent device determines that response content to the user instruction "View today's schedule" is "schedule" and is privacy-related, and determines, based on the user image, that a scenario in which the user is currently located includes a plurality of persons, that is, the user is currently in a multi-person scenario. In this case, the intelligent device outputs the response content to the user instruction, that is, a schedule of the user, by using a non-public module; or hides a key personal name or location when outputting the response content to the user. instruction by using a public module.

For example, the schedule of the user is "Attend the bidding conference of company A in the Hi-Tech hotel at today's 14:40". Refer to FIG. 6. The central control display screen 40 displays "You will attend the bidding conference of Company * in the ** hotel at today's 14:40".

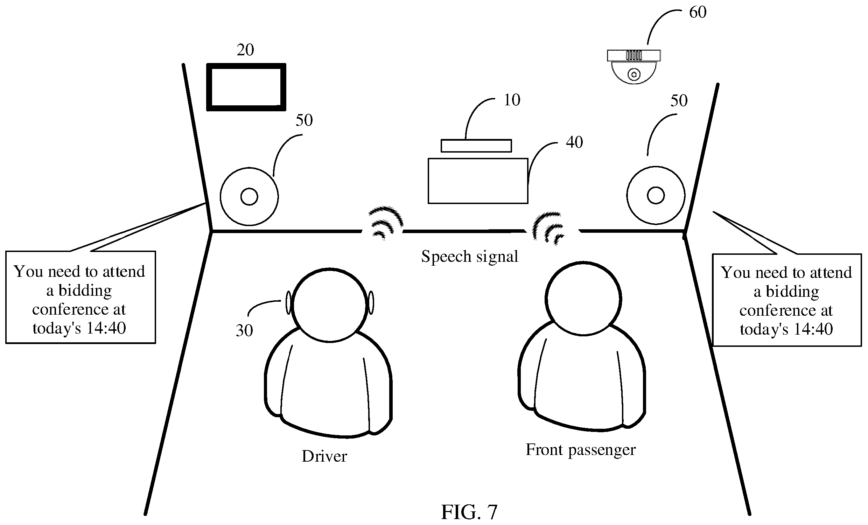

Alternatively, refer to FIG. 7. The in-vehicle audio 50 plays speech "You need to attend a bidding conference at today's 14:40".

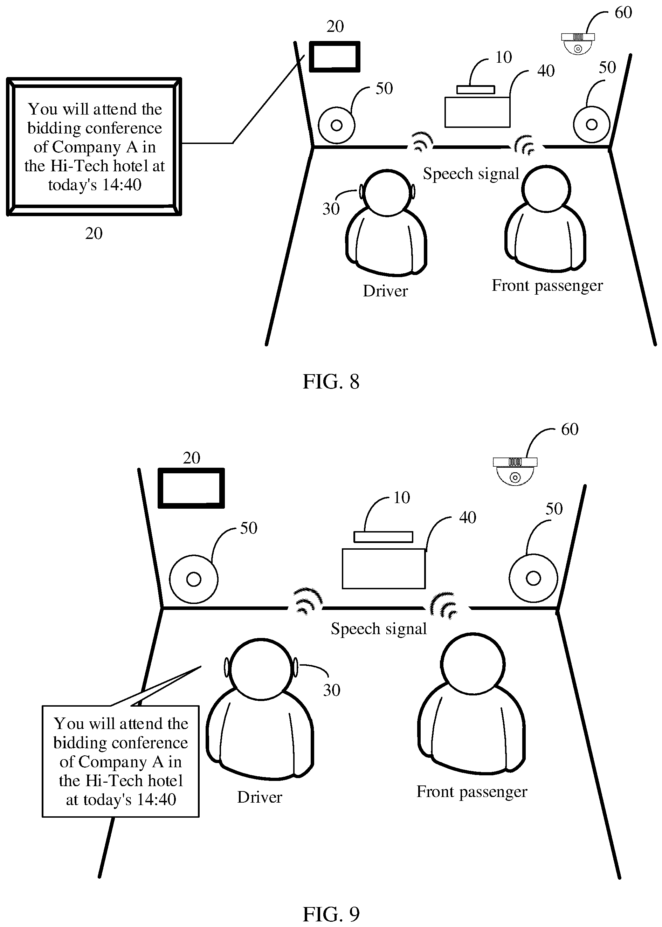

Alternatively, refer to FIG. 8. The head-up display screen 20 displays "You will attend the bidding conference of Company A in the Hi-Tech hotel at today's 14:40".

Alternatively, refer to FIG. 9. The headset 30 plays speech "You will attend the bidding conference of Company A in the Hi-Tech hotel at today's 14:40".

In the method provided in this embodiment of this application, the AD module is added to the intelligent device to filter out many invalid speech signals, to reduce feedback erroneously triggered by invalid speech and improve use experience of a user. In addition, a feedback mode may be further decided, and a feedback manner is dynamically adjusted based on a user intention and a user scenario. Adjustment of a feedback device is supported, and adjustment of feedback content is also supported, so that protect privacy of a user can be better protected.

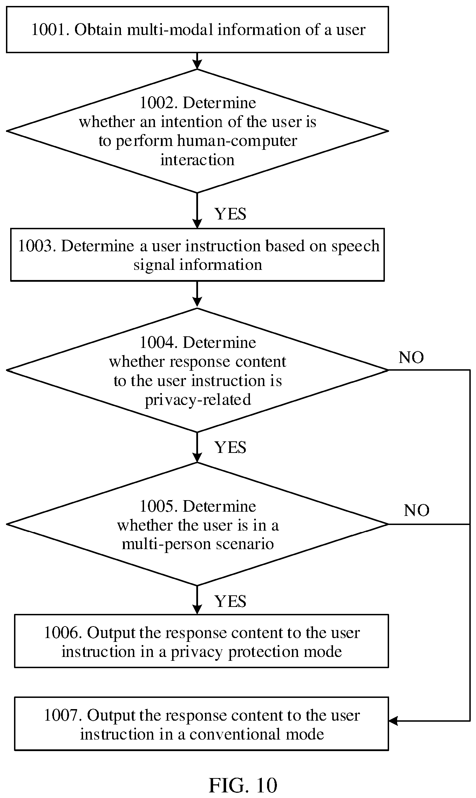

An embodiment of this application further provides a speech interaction method. As shown in FIG. 10, the method includes the following steps.

1001. Obtain multi-modal information of a user.

The multi-modal information of the user may include user speech information or a user image. The user speech information may be an analog signal received by an intelligent device, and the user image may be an image photographed by a camera in a vehicle.

1002. Determine whether an intention of the user is to perform human-computer interaction.

In a possible implementation, it is usually considered that user speech that is input after the intelligent device in a system is woken up by using a wakeup word is valid, that is, after the system is woken up by using the wakeup word, received speech is speech sent by the user during human-computer interaction.

In another possible implementation, the intelligent device is in a wakeup state for a long time. When the intelligent device wakes up for a long time, speech received by the device may include chat speech between the user and another person. Therefore, an AD module may determine that the received speech is speech sent by the user during human-computer interaction.

Alternatively, the camera may be used to determine a gazed object of the user. When the gazed object of the user is a target direction, for example, a gaze direction of the user points to the intelligent device, it may be determined that received speech is speech sent by the user during human-computer interaction.

If the received speech is speech sent by the user during human-computer interaction, step 1003 is performed; or if the received speech is not speech sent by the user during human-computer interaction, only a waveform is displayed on a display screen of the intelligent device to indicate that the device is receiving user speech.

1003. Determine a user instruction based on speech signal information.

For specific implementation, refer to related descriptions in step 402. Details are not described herein again.

1004. Determine whether response content to the user instruction is privacy-related.

Specifically, a private content list may be defined. Common private content includes a short message service, WeChat, Memo, and the like. Privacy-related response content may be content in the short message service, content in WeChat, and content in Memo. When the response content to the user instruction includes no private content in the private content list, step 1007 is directly performed to conventionally display the response content to the user instruction; or when the response content to the user instruction includes the private content in the private content list, subsequent further determining and decision are performed, that is, step 1005 is performed.

1005. Determine whether the user is in a multi-person scenario.

Specifically, whether the user is in the multi-person scenario may be determined based on the user image obtained by the camera. For example, it may be determined, based on the user image, whether there are a plurality of persons in the vehicle. A privacy problem occurs only when there are a plurality of persons. In the multi-person scenario, there is a risk of privacy leakage when feedback content is broadcast through speech by using in-vehicle audio or the feedback content is presented by using a central control display screen.

Therefore, when it is determined that there are a plurality of persons in the vehicle, it is determined whether the user is in the multi-person scenario, and step 1006 is performed to protect privacy; or if the user is not in the multi-person scenario, step 1007 is performed to output the response content to the user instruction in a conventional manner.

1006. Output the response content to the user instruction in a privacy protection mode.

In specific implementation, the response content to the user instruction may be output by using a non-public device in the intelligent device. For example, the response content to the user instruction is played by using a headset worn by a driver user, or the response content to the user instruction is displayed by using a display screen at a driver's seat.

For example, it may be first detected whether a hardware condition required for a privacy mode exists, for example, the display screen at the driver's seat, or whether the driver wears the headset. When the hardware condition required for the privacy mode is met, for example, the driver wears the headset, the response content to the user instruction may be played by using the headset.

When the required hardware environment does not exist, feedback content is adjusted to hide privacy information of the user. For example, the response content is displayed on the central control display screen, but privacy information such as a key location or personal name is hidden.

1007. Output the response content to the user instruction in a conventional mode.

The outputting the response content to the user instruction in a conventional mode is outputting the response content to the user instruction by using a public device in the intelligent device. For example, the response content to the user instruction is played by using in-vehicle audio, or the response content to the user instruction is displayed by using a central control display screen.

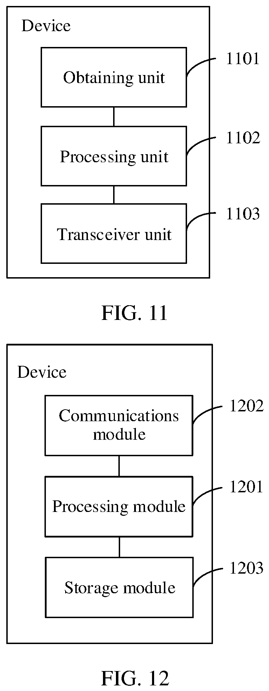

When a functional module is obtained through division for each corresponding function, FIG. 11 is a schematic diagram of a possible structure of a device (for example, the intelligent device in embodiments of this application) in the foregoing embodiments. For example, the device shown in FIG. 11 may be the intelligent device in embodiments of this application, or may be a component that is in the intelligent device and that implements the foregoing method. As shown in FIG. 11, the device includes an obtaining unit 1101, a processing unit 1102, and a transceiver unit 1103. The processing unit may be one or more processors, and the transceiver unit may be a transceiver.

The obtaining unit 1101 is configured to support the intelligent device in performing step 401 and/or another process of the technology described in this specification.

The data processing unit 1102 is configured to support the intelligent device in performing step 401 to step 404 and/or another process of the technology described in this specification.

The transceiver unit 1103 is configured to support communication between the intelligent device and another device or device, and/or is configured to perform another process of the technology described in this specification. The transceiver unit 1103 may be an interface circuit or a network interface of the intelligent device.

It should be noted that, all related content of steps in the foregoing method embodiments may be cited in function descriptions of corresponding functional modules. Details are not described herein again.

In a possible implementation, the structure shown in FIG. 11 may be a structure of a chip applied to the intelligent device. The chip may be a system-on-a-chip (System-On-a-Chip, SOC), a baseband chip with a communications function, or the like.

For example, when an integrated unit is used, a schematic diagram of a structure of a device provided in an embodiment of this application is shown in FIG. 12. In FIG. 12, the device includes a processing module 1201 and a communications module 1202. The processing module 1201 is configured to: control and manage an action of the device, for example, perform the steps performed by the obtaining unit 1101 and the processing unit 1102, and/or perform another process of the technology described in this specification. The communications module 1202 is configured to perform the step performed by the transceiver unit 1103, to support interaction between the device and another device, such as interaction between the device and another terminal device. As shown in FIG. 12, the device may further include a storage module 1203, and the storage module 1203 is configured to store program code and data of the device.

When the processing module 1201 is a processor, the communications module 1202 is a transceiver. When the storage module 1203 is a memory, the device is the device shown in FIG. 2.

An embodiment of this application provides a computer-readable storage medium. The computer-readable storage medium stores instructions, and the instructions are used to perform the method shown in FIG. 4 or FIG. 10.

An embodiment of this application provides a computer program product including instructions. When the computer program product is run on a device, the device is enabled to implement the method shown in FIG. 4 or FIG. 10.

An embodiment of this application provides a wireless device. The wireless device stores instructions. When the wireless device is run on the device shown in FIG. 2, FIG. 11, or FIG. 12, the device is enabled to perform the method shown in FIG. 4 or FIG. 10. The device may be a chip or the like.

It should be noted that, all related content of steps in the foregoing method embodiments may be cited in function descriptions of corresponding functional modules. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

All or some of the methods in embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

In embodiments of this application, without a logical contradiction, embodiments may be referenced to each other, for example, methods and/or terms in the method embodiments may be referenced to each other, for example, functions and/or terms in the apparatus embodiments may be referenced to each other, for example, functions and/or terms in the apparatus embodiments and the method embodiments may be referenced to each other.

A person skilled in the art can make various modifications and variations to this application without departing from the scope of this application. In this way, this application is also intended to include these modifications and variations made to this application if they fall within the scope of the method provided in embodiments of this application and the equivalent technology thereof.

## Claims

1. An in-vehicle speech interaction method, comprising:
obtaining (401) user speech information;
determining (402) a user instruction based on the user speech information;
determining (403), based on the user instruction, whether response content to the user instruction is privacy-related; and
determining (404), based on whether the response content is privacy-related, whether to output the response content in a privacy protection mode;
wherein the determining, based on whether the response content is privacy-related, whether to output the response content in a privacy protection mode is specifically:
if it is determined that the response content is privacy-related and the user is in a single-person scenario, outputting the response content in a non-privacy mode .

2. The method according to claim 1, wherein the method further comprises: obtaining a user image; and
the determining (402) a user instruction based on the user speech information is specifically:
determining a gaze direction of a user based on the user image;
when determining that the gaze direction is a target direction, determining that an intention of the user is to perform human-computer interaction; and
determining the user instruction based on the user speech information sent when the gaze direction is the target direction.

3. The method according to claim 1 or 2, wherein the determining (404), based on whether the response content is privacy-related, whether to output the response content in a privacy protection mode is specifically:
if it is determined that the response content is privacy-related and the user is in a multi-person scenario, outputting the response content in the privacy protection mode.

4. The method according to claim 1 or 2, wherein the determining (404), based on whether the response content is privacy-related, whether to output the response content in a privacy protection mode is specifically:
if it is determined that the response content is privacy-related, outputting the response content in the privacy protection mode.

5. The method according to claim 3 or 4, wherein the outputting the response content in the privacy protection mode is specifically:
when outputting the response content by using a public device, hiding private content comprised in the response content; or
outputting the response content by using a non-public device.

6. A device, comprising:
an obtaining unit (1101), configured to obtain user speech information; and
a processing unit (1102), configured to determine a user instruction based on the user speech information, wherein
the processing unit is further configured to: determine, based on the user instruction, whether response content to the user instruction is privacy-related; and determine, based on whether the response content is privacy-related, whether to output the response content in a privacy protection mode;
wherein the processing unit is specifically configured to: if it is determined that the response content is privacy-related and the user is in a single-person scenario, output the response content in a non-privacy mode.

7. The device according to claim 6, wherein the obtaining unit (1101) is further configured to obtain a user image; and
the processing unit (1102) is specifically configured to: determine a gaze direction of a user based on the user image;
when determining that the gaze direction is a target direction, determine that an intention of the user is to perform human-computer interaction; and
determine the user instruction based on the user speech information sent when the gaze direction is the target direction.

8. The device according to claim 6 or 7, wherein the processing unit (110) is specifically configured to: if it is determined that the response content is privacy-related and the user is in a multi-person scenario, output the response content in the privacy protection mode.

9. The device according to claim 6 or 7, wherein the processing unit (1102) is specifically configured to: if it is determined that the response content is privacy-related, output the response content in the privacy protection mode.

10. The device according to claim 8 or 9, wherein the processing unit (1102) is specifically configured to: when outputting the response content by using a public device, hide private content comprised in the response content; or
output the response content by using a non-public device.

11. An apparatus, comprising at least one processor and a memory, wherein the at least one processor is coupled to the memory;
the memory is configured to store a computer program; and
the at least one processor is configured to execute the computer program stored in the memory, so that the apparatus performs the method according to any one of claims 1 to 5.

12. A computer-readable storage medium, wherein the computer-readable storage medium stores a computer program or instructions, and when the computer program or the instructions are run, the method according to any one of claims 1 to 5 is implemented.

## Patentansprüche

1. Sprachinteraktionsverfahren in einem Fahrzeug, umfassend:
Erlangen (401) von Benutzersprachinformationen;
Bestimmen (402) einer Benutzeranweisung basierend auf den Benutzersprachinformationen;
Bestimmen (403), basierend auf der Benutzeranweisung, ob Antwortinhalt auf die Benutzeranweisung datenschutzrelevant ist; und
Bestimmen (404), basierend darauf, ob der Antwortinhalt datenschutzrelevant ist, ob der Antwortinhalt in einem Datenschutzmodus auszugeben ist;
wobei das Bestimmen, basierend darauf, ob der Antwortinhalt datenschutzrelevant ist, ob der Antwortinhalt in einem Datenschutzmodus auszugeben ist, insbesondere Folgendes umfasst:
wenn bestimmt wird, dass der Antwortinhalt datenschutzrelevant ist und der Benutzer sich in einem Einzelpersonenszenario befindet, Ausgeben des Antwortinhalts in einem Nicht-Datenschutzmodus.

2. Verfahren nach Anspruch 1, wobei das Verfahren ferner Folgendes umfasst: Erlangen eines Benutzerbilds; und
wobei das Bestimmen (402) einer Benutzeranweisung basierend auf den Benutzersprachinformationen insbesondere Folgendes umfasst:
Bestimmen einer Blickrichtung eines Benutzers basierend auf dem Benutzerbild;
wenn bestimmt wird, dass die Blickrichtung eine Zielrichtung ist, Bestimmen, dass es eine Absicht des Benutzers ist, eine Interaktion zwischen Mensch und Computer durchzuführen; und
Bestimmen der Benutzeranweisung basierend auf den Benutzersprachinformationen, die gesendet werden, wenn die Blickrichtung die Zielrichtung ist.

3. Verfahren nach Anspruch 1 oder 2, wobei das Bestimmen (404), basierend darauf, ob der Antwortinhalt datenschutzrelevant ist, ob der Antwortinhalt in einem Datenschutzmodus auszugeben ist, insbesondere Folgendes umfasst:
wenn bestimmt wird, dass der Antwortinhalt datenschutzrelevant ist und der Benutzer sich in einem Mehrpersonenszenario befindet, Ausgeben des Antwortinhalts in dem Datenschutzmodus.

4. Verfahren nach Anspruch 1 oder 2, wobei das Bestimmen (404), basierend darauf, ob der Antwortinhalt datenschutzrelevant ist, ob der Antwortinhalt in einem Datenschutzmodus auszugeben ist, insbesondere Folgendes umfasst:
wenn bestimmt wird, dass der Antwortinhalt datenschutzrelevant ist, Ausgeben des Antwortinhalts in dem Datenschutzmodus.

5. Verfahren nach Anspruch 3 oder 4, wobei das Ausgeben des Antwortinhalts in dem Datenschutzmodus insbesondere Folgendes umfasst:
beim Ausgeben des Antwortinhalts unter Verwendung einer öffentlichen Vorrichtung, Verbergen von privatem Inhalt, der in dem Antwortinhalt umfasst ist; oder
Ausgeben des Antwortinhalts unter Verwendung einer nicht-öffentlichen Vorrichtung.

6. Vorrichtung, umfassend:
eine Erlangungseinheit (1101), die dazu konfiguriert ist, Benutzersprachinformationen zu erlangen; und
eine Verarbeitungseinheit (1102), die dazu konfiguriert ist, eine Benutzeranweisung basierend auf den Benutzersprachinformationen zu bestimmen, wobei
die Verarbeitungseinheit ferner zu Folgendem konfiguriert ist:
Bestimmen, basierend auf der Benutzeranweisung, ob der Antwortinhalt auf die Benutzeranweisung datenschutzrelevant ist; und Bestimmen, basierend darauf, ob der Antwortinhalt datenschutzrelevant ist, ob der Antwortinhalt in einem Datenschutzmodus auszugeben ist;
wobei die Verarbeitungseinheit insbesondere zu Folgendem konfiguriert ist: wenn bestimmt wird, dass der Antwortinhalt datenschutzrelevant ist und der Benutzer sich in einem Einzelpersonenszenario befindet, Ausgeben des Antwortinhalts in einem Nicht-Datenschutzmodus.

7. Vorrichtung nach Anspruch 6, wobei die Erlangungseinheit (1101) ferner dazu konfiguriert ist, ein Benutzerbild zu erlangen; und
die Verarbeitungseinheit (1102) insbesondere zu Folgendem konfiguriert ist: Bestimmen einer Blickrichtung eines Benutzers basierend auf dem Benutzerbild;
wenn bestimmt wird, dass die Blickrichtung eine Zielrichtung ist, Bestimmen, dass es eine Absicht des Benutzers ist, eine Interaktion zwischen Mensch und Computer durchzuführen; und
Bestimmen der Benutzeranweisung basierend auf den Benutzersprachinformationen, die gesendet werden, wenn die Blickrichtung die Zielrichtung ist.

8. Vorrichtung nach Anspruch 6 oder 7, wobei die Verarbeitungseinheit (110) insbesondere zu Folgendem konfiguriert ist: wenn bestimmt wird, dass der Antwortinhalt datenschutzrelevant ist und der Benutzer sich in einem Mehrpersonenszenario befindet, Ausgeben des Antwortinhalts in dem Datenschutzmodus.

9. Vorrichtung nach Anspruch 6 oder 7, wobei die Verarbeitungseinheit (1102) insbesondere zu Folgendem konfiguriert ist: wenn bestimmt wird, dass der Antwortinhalt datenschutzrelevant ist, Ausgeben des Antwortinhalts in dem Datenschutzmodus.

10. Vorrichtung nach Anspruch 8 oder 9, wobei die Verarbeitungseinheit (1102) insbesondere zu Folgendem konfiguriert ist: beim Ausgeben des Antwortinhalts unter Verwendung einer öffentlichen Vorrichtung, Verbergen von privatem Inhalt, der in dem Antwortinhalt umfasst ist; oder
Ausgeben des Antwortinhalts unter Verwendung einer nicht-öffentlichen Vorrichtung.

11. Einrichtung, umfassend mindestens einen Prozessor und einen Speicher, wobei der mindestens eine Prozessor mit dem Speicher gekoppelt ist;
der Speicher dazu konfiguriert ist, ein Computerprogramm zu speichern; und
der mindestens Prozessor dazu konfiguriert ist, das Computerprogramm, das in dem Speicher gespeichert ist, auszuführen, so dass die Einrichtung das Verfahren nach einem der Ansprüche 1 bis 5 durchführt.

12. Computerlesbares Speichermedium, wobei das computerlesbare Speichermedium ein Computerprogramm oder Anweisungen speichert und, wenn das Computerprogramm oder die Anweisungen laufen, das Verfahren nach einem der Ansprüche 1 bis 5 implementiert wird.

## Revendications

1. Procédé d'interaction vocale dans un véhicule, comprenant :
l'obtention (401) d'informations vocales d'utilisateur ;
la détermination (402) d'une instruction d'utilisateur sur la base des informations vocales d'utilisateur ;
le fait de déterminer (403), sur la base des instructions d'utilisateur, si le contenu de la réponse aux instructions d'utilisateur est lié à la confidentialité ; et
le fait de déterminer (404), sur la base de si le contenu de la réponse est lié à la confidentialité, s'il faut afficher le contenu de la réponse en mode de confidentialité ;
dans lequel le fait de déterminer, sur la base de si le contenu de la réponse est lié à la confidentialité, s'il faut afficher le contenu de la réponse en mode de confidentialité est spécifiquement :
s'il est déterminé que le contenu de la réponse est lié à la confidentialité et que l'utilisateur est dans un scénario d'une seule personne, l'affichage du contenu de la réponse en mode non confidentiel.

2. Procédé selon la revendication 1, dans lequel le procédé comprend également : l'obtention d'une image d'utilisateur ; et la détermination (402) d'une instruction d'utilisateur sur la base des informations vocales d'utilisateur est spécifiquement :
la détermination d'une direction de regard d'un utilisateur sur la base de l'image d'utilisateur ;
lors de la détermination que la direction de regard est une direction cible, la détermination qu'une intention de l'utilisateur est de réaliser une interaction homme-machine ; et
la détermination des instructions d'utilisateur sur la base des informations vocales d'utilisateur envoyées lorsque la direction de regard est la direction cible.

3. Procédé selon la revendication 1 ou 2, dans lequel le fait de déterminer (404), sur la base de si le contenu de la réponse est lié à la confidentialité, s'il faut afficher le contenu de la réponse en mode de confidentialité est spécifiquement :
s'il est déterminé que le contenu de la réponse est lié à la confidentialité et que l'utilisateur est dans un scénario de plusieurs personnes, l'affichage du contenu de la réponse en mode de confidentialité.

4. Procédé selon la revendication 1 ou 2, dans lequel le fait de déterminer (404), sur la base de si le contenu de la réponse est lié à la confidentialité, s'il faut afficher le contenu de la réponse en mode de confidentialité est spécifiquement :
s'il est déterminé que le contenu de la réponse est lié à la confidentialité, l'affichage du contenu de la réponse en mode de confidentialité.

5. Procédé selon la revendication 3 ou 4, dans lequel l'affichage du contenu de la réponse en mode de confidentialité est spécifiquement :
lors de l'affichage du contenu de la réponse en utilisant un dispositif public, le masquage du contenu confidentiel compris dans le contenu de la réponse ; ou
l'affichage du contenu de la réponse en utilisant un dispositif non public.

6. Dispositif, comprenant :
une unité d'obtention (1101), configurée pour obtenir des informations vocales d'utilisateur ; et
une unité de traitement (1102), configurée pour déterminer une instruction d'utilisateur sur la base des informations vocales d'utilisateur, dans lequel
l'unité de traitement est également configurée pour :
déterminer, sur la base des instructions d'utilisateur, si le contenu de la réponse aux instructions d'utilisateur est lié à la confidentialité ; et déterminer, sur la base de si le contenu de la réponse est lié à la confidentialité, s'il faut afficher le contenu de la réponse en mode de confidentialité ;
dans lequel l'unité de traitement est spécifiquement configurée pour : s'il est déterminé que le contenu de la réponse est lié à la confidentialité et que l'utilisateur est dans un scénario d'une seule personne, afficher le contenu de la réponse en mode non confidentiel.

7. Dispositif selon la revendication 6, dans lequel l'unité d'obtention (1101) est également configurée pour obtenir une image d'utilisateur ; et
l'unité de traitement (1102) est spécifiquement configurée pour : déterminer une direction de regard d'un utilisateur sur la base de l'image d'utilisateur ;
lors de la détermination que la direction de regard est une direction cible, déterminer qu'une intention de l'utilisateur est de réaliser une interaction homme-machine ; et
déterminer les instructions d'utilisateur sur la base des informations vocales d'utilisateur envoyées lorsque la direction de regard est la direction cible.

8. Dispositif selon la revendication 6 ou 7, dans lequel l'unité de traitement (110) est spécifiquement configurée pour : s'il est déterminé que le contenu de la réponse est lié à la confidentialité et que l'utilisateur est dans un scénario de plusieurs personnes, afficher le contenu de la réponse en mode de confidentialité.

9. Dispositif selon la revendication 6 ou 7, dans lequel l'unité de traitement (1102) est spécifiquement configurée pour : s'il est déterminé que le contenu de la réponse est lié à la confidentialité, afficher le contenu de la réponse en mode de confidentialité.

10. Dispositif selon la revendication 8 ou 9, dans lequel l'unité de traitement (1102) est spécifiquement configurée pour : lors de l'affichage du contenu de la réponse en utilisant un dispositif public, masquer le contenu confidentiel compris dans le contenu de la réponse ; ou
afficher le contenu de la réponse en utilisant un dispositif non public.

11. Appareil, comprenant au moins un processeur et une mémoire, dans lequel l'au moins un processeur est couplé à la mémoire ; la mémoire est configurée pour stocker un programme informatique ; et
l'au moins un processeur est configuré pour exécuter le programme informatique stocké dans la mémoire, de sorte que l'appareil réalise le procédé selon l'une quelconque des revendications 1 à 5.

12. Support de stockage lisible par ordinateur, dans lequel le support de stockage lisible par ordinateur stocke un programme informatique ou des instructions, et lorsque le programme informatique ou les instructions sont exécutés, le procédé selon l'une quelconque des revendications 1 à 5 est mis en œuvre.
